# FASCICULE DE BREVET EUROPEEN

(11) **EP 0 728 117 B1**
(45) Date de publication et mention de la délivrance du brevet: **03.06.1998**
(21) Numéro de dépôt: 95900193.4
(22) Date de dépôt: 07.11.1994
(51) Int. Cl.: B65H 54/10, B65H 54/32, B65H 55/04, B65H 75/12

(54) **PROCEDE DE DECALAGE DES COUCHES D'UN BOBINAGE**
VERFAHREN ZUR VERSETZTEN ANORDNUNG DER LAGEN EINER WICKLUNG
METHOD FOR OFFSETTING THE LAYERS OF A COIL

(30) Priorité: 09.11.1993 FR 9313292
(43) Date de publication de la demande: 28.08.1996
(73) Titulaire: AEROSPATIALE Société Nationale Industrielle, 75016 Paris (FR)
(72) Inventeur: Thominet, Gérard, 08170 Fumay (FR)
(74) Mandataire: Poulin, Gérard
(86) Numéro de dépôt international: FR9401280
(87) Numéro de publication internationale: WO9513237

(56) Documents cités:
- EP-A- 0 264 941
- EP-A- 0 466 135
- CH-A- 427 519

## Description

La présente invention concerne la réalisation de bobinages d'éléments filiformes de grande longueur, bobinés à spires jointives ou très proches les unes des autres et en plusieurs couches, sur un support ou noyau en vue d'un dévidage ultérieur par l'extérieur. Elle porte principalement sur un procédé de décalage des couches du bobinage et sur un dispositif de mise en oeuvre du procédé.

Les éléments filiformes, éventuellement assemblés, dont il est question ici sont notamment, des fils métalliques nus ou revêtus, des fils en plastique, des fibres optiques, des fils textiles ou analogues, qui sont généralement de petit diamètre, inférieur à un millimètre. Cependant, rien ne s'oppose à l'utilisation d'éléments de plus gros diamètre, ainsi que d'éléments non cylindriques, méplats par exemple.

Les descriptions qui vont suivre sont traitées dans le cadre de l'utilisation de la fibre optique, l'adaptation à d'autres éléments est du domaine de l'homme de métier. La fibre optique utilisée sera, par exemple, d'un diamètre sur revêtement de 250 microns; des diamètres inférieurs sont évidemment possibles.

Actuellement, de tels bobinages sont principalement utilisés pour le filoguidage d'engins opérant dans l'air ou dans l'eau. L'élément optique bobiné, pouvant comporter une ou plusieurs fibres, assure la liaison entre le poste de contrôle et l'engin. La bobine de filoguidage est fixée sur l'engin et le dévidage du fil s'effectue à la défilêe.

L'objectif est d'obtenir le maximum de longueur de fibre optique bobinêe pour un encombrement donné, tout en conservant une très bonne fiabilité de tir.

Une réalisation classique de bobinage fait appel à la technique dite multicouche et à spires jointives ou à spires très proches les unes des autres. Dans cette technique, la réalisation de la première couche, sur un support cylindrique ou conique, doit être d'une grande précision car, chaque spire d'une couche, à partir de la seconde couche, se positionne entre les spires de la couche précédente; cette régularité de bobinage doit être maintenue sur toute la longueur de la fibre optique afin de minimiser les perturbations pendant le dévidage qui s'effectue à grande vitesse. Cette régularité géométrique ne peut être assurée si le support du bobinage comporte à ses extrémités des flasques verticales ou coniques telles que décrites dans de document CH. 427519.

En conséquence, afin de maintenir la stabilité du bobinage, chaque couche est arrêtée, de quelques spires, avant la fin de la couche sous-jacente, et la fibre est ramenée en arrière, de quelques spires également, pour commencer la couche suivante. Avec cette technique de bobinage la longueur d'une couche est inférieure à la précédente; il en résulte une limitation du nombre de couches du bobinage.

Un autre inconvénient majeur de ce type de bobinage est le risque d'entraînement de plusieurs spires, à l'extrémité aval ( extrémité du bobinage la plus à l'arrière de l'engin ) de la couche en cours de dévidage; ce qui provoquerait, à coup sûr, la casse de l'élément optique. De plus, il arrive également que le fil en cours de dévidage vienne frotter, à l'extrémité aval du bobinage, sur les décalages et les dernières spires des couches inférieures; il peut en résulter un décollement intempestif de spires et la coupure de la liaison.

Le surcollage des spires dans la zone des décalages peut diminuer les risques d'arrachement par frottement mais, par contre, augmente le risque d'entraînement de plusieurs spires à l'extrémité aval de la couche en cours de dévidage.

Les risques majeurs se situent donc dans la zone des décalages aval du bobinage.

La présente invention a pour objet de proposer un procédé de décalage des couches du bobinage qui permet de pallier les défauts signalés précédemment.

La technique proposée consiste à réaliser les décalages, non plus en retrait par rapport à la couche précédente, mais au contraire, en reportant le début de la couche suivante au-delà, de quelques spires, de la fin de la couche en cours de bobinage; les spires supplémentaires prenant appui sur un support de forme appropriée permettant de conserver la régularité du bobinage pour toutes les couches.

Le parcours de la fibre, entre la fin de la couche en cours de bobinage et le début de la couche suivante, est assuré en creux dans le support de forme appropriée cité ci-dessus.

La valeur des décalages est déterminée lors de la conception de la bobine, elle n'est pas obligatoirement la même pour toutes les couches; cette latitude permet de garder la maîtrise de la longueur des couches successives du bobinage.

Il est envisagé de n'appliquer cette technique de décalage des couches qu'à l'extrémité aval de la bobine, son application aux décalages côté amont ne se justifant pas techniquement. Les noyaux de bobinage peuvent être de formes quelconques, en particulier cylindriques ou coniques.

Dans le cas particulier où les décalages amont ( en retrait ) et aval ( en débordement ) sont identiques, la longueur des différentes couches du bobinage reste constante.

Le support des décalages, de forme appropriée, porte les empreintes des spires supplémentaires relatives à chaque couche du bobinage à réaliser, ainsi que celle de la fibre reliant la fin de la couche en cours au début de la couche suivante. Ce support est obtenu par moulage à partir d'un bobinage réalisé de façon classique, c'est-à-dire comportant des décalages en retrait. Le moulage des décalages est exécuté en un matériau souple et élastique, de type silicone par exemple, non adhérent aux spires du bobinage. Après démoulage, l'empreinte ainsi obtenue est retournée et devient alors le support recherché pour la réalisation des décalages objets de la présente invention. Le support sera positionné sur le noyau de bobinage dans le bon sens, c'est-à-dire, grand diamètre côté extrémité aval.

Ce support peut être utilisé comme modèle dans le cas d'une fabrication de série il sera tenu compte des caractéristiques du matériau de moulage comme précisé ci-après.

Le diamètre du fil constituant le bobinage sur lequel sera effectué le moulage des décalages, sera ajusté en fonction du comportement du matériau de moulage, de son élasticité et de son retrait en particulier; ce fil peut être une fibre optique ou tout autre élément non-adhésif, tel qu'un fil cuivre revêtu spécialement; cette mise au point est du ressort de l'homme de métier.

Avec ce support, la dernière spire de la couche se trouve en butée dans son empreinte, et lors du dévidage le risque d'entraînement de plusieurs spires en fin de couche n'existe plus.

En outre, le surcollage des décalages ne se justifie plus car, l'arrachement de spires aux décalages aval des couches inférieures est impossible, ce qui est bénéfique pour le dévidage à grande vitesse car les projections de colle sur la face interne du capot de protection du bobinage sont néfastes au bon déroulement de la fibre optique.

La présente invention a également pour objet une méthode de bobinage et un dispositif de mise en oeuvre du procédé.

Nous avons précisé précédemment que le procédé de décalage des couches, objet de l'invention, n'était appliqué qu'à extrémité aval du bobinage, son application aux décalages amont ne se justifiant pas techniquement.

Afin de conserver la régularité géométrique du bobinage sur la totalité de sa longueur, il importe que lors de la réalisation des couches dans le sens amont vers aval les spires, au décalage aval, se positionnent exactement dans les empreintes correspondant à la couche en cours de bobinage. Ceci est facilement obtenu en exécutant une couche provisoire dans le sens aval vers amont, avec un fil de même diamètre que la fibre optique du bobinage; avantageusement, ce fil sera une fibre optique identique à celle du bobinage. Le début de la couche provisoire se situera sur le décalage aval correspondant à la couche à exécuter.

Pendant cette opération, la fibre optique destinée au bobinage à réaliser est stockée sur l'axe d'entraînement du noyau de bobinage. A la fin de cette opération, la fibre optique à bobiner est replacée sur son dévidoir et la couche provisoire est remplacée spire à spire afin de continuer le bobinage c'est-à-dire, que la fibre optique du bobinage prend la place de la couche provisoire au fur et à mesure de l'enlèvement de celle-ci. Le fil de la couche provisoire est récupéré sur un bobinoir auxiliaire et peut être à nouveau utilisé pour la suite des opérations.

Les couches de sens aval vers amont se confectionnent normalement sans contraintes particulières.

Les caractéristiques et avantages de l'invention ressortiront mieux de la description d'exemple de réalisation illustré par les dessins ci-annexés.

La figure 1 représente un bobinage réalisé suivant l'état de la technique antérieure.

La figure 2 représente, en coupe, le bobinage de la figure 1.

La figure 3 représente, en coupe, un bobinage réalisé suivant la présente invention.

La figure 4 représente le support moulé permettant la réalisation des décalages selon l'invention.

La figure 5 représente, en coupe, un moulage effectué sur les décalages aval d'un bobinage réalisé suivant la technique antérieure.

La figure 6 représente, en coupe, après démoulage l'empreinte des décalages.

La figure 7 simule l'opération de retournement de l'empreinte.

La figure 8 représente l'empreinte des décalages positionnée sur un noyau de bobinage.

La figure 9 représente schématiquement suivant un mode de réalisation, un équipement permettant la confection d'un bobinage comportant des décalages de couches, côté aval, selon la présente invention.

La figure 10 représente schématiquement l'équipement en cours de réalisation, dans le sens aval vers amont, de la couche provisoire.

La figure 11 représente schématiquement l'équipement en cours de réalisation de la couche de bobinage dans le sens amont vers aval.

La figure 12 représente schèmatiquement l'équipement en cours de réalisation de la couche de bobinage dans le sens aval vers amont.

La figure 13 représente un bobinage réalisé suivant la technique de l'invention ( application à l'extrémité aval).

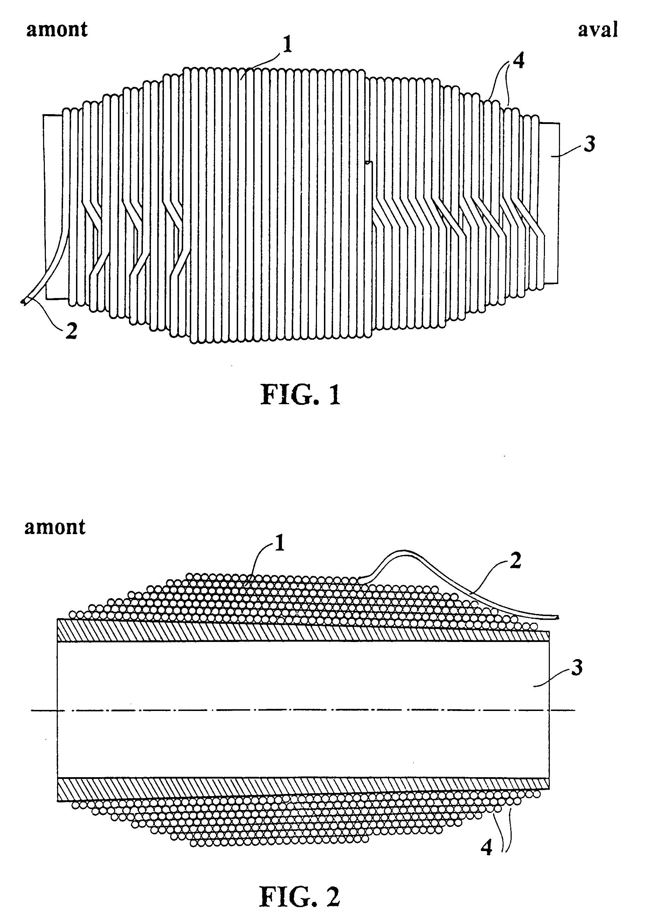

La figure 1 illustre, conformément à l'état de la technique antérieure, la mise en bobine ( 1 ) d'un élément filiforme ( 2 ) de grande longueur, tel qu'une fibre optique par exemple, enroulé à spires jointives et en couches successives sur un noyau conique ( 3 ). Un adhésif déposé sur le fil assure une certaine cohésion entre les spires. On peut distinguer sur cette figure, côtés amont et aval de la bobine, les décalages successifs ( 4 ), en retrait, effectués aux changements de couches.

Nous avons repéré comme suit les deux extrémités de la bobine.
- l'extrémité aval correspond à l'extrémité de sortie du fil ( 2 ) lors du dévidage.
- l'extrémité amont correspond à l'autre extrémité.

La figure 2 représente, en coupe, le bobinage de la figure 1; sur cette figure, le fil est représenté en cours de débobinage et en appui sur les décalages aval; le risque d'entraînement des dernières spires des couches inférieures est mis en évidence.

Le procédé de décalage des couches selon la présente invention ne sera appliqué qu'à l'extrémité aval de la bobine, son extension à l'extrémité amont ne se justifiant pas techniquement.

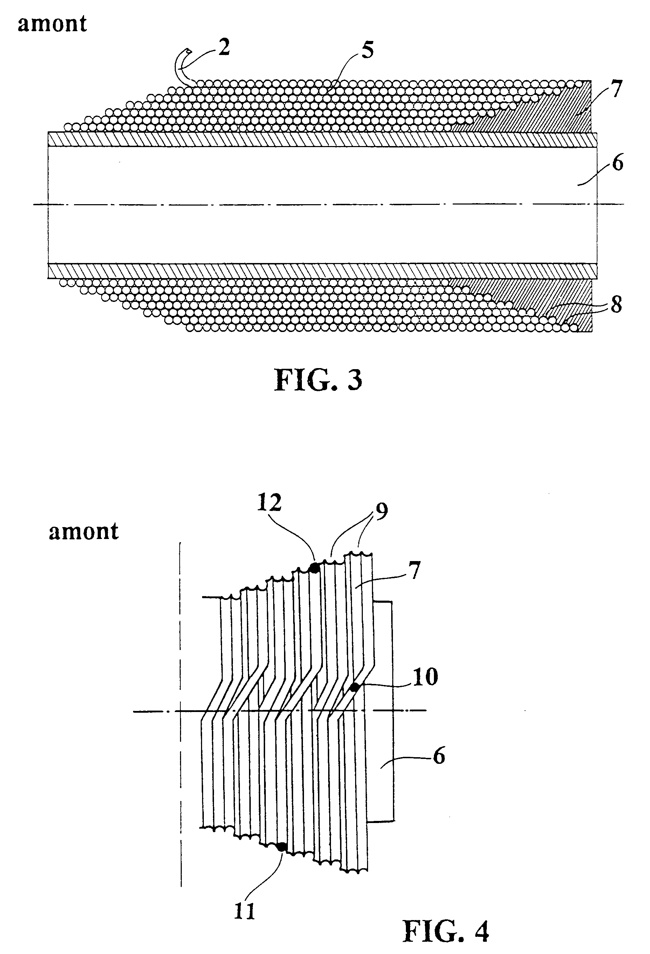

La figure 3 représente, en coupe, un bobinage ( 5 ) réalisé suivant la présente invention. Le noyau ( 6 ) de la bobine supporte, a son extrémité aval, un moulage ( 7 ) destiné à recevoir dans ses empreintes les spires de décalage ( 8 ) des différentes couches du bobinage ( 5 ); c'est ce support moulé ( 7 ) qui permet la réalisation des décalages de couches selon la présente invention.

Se référant à la figure 4, le support ( 7 ) comporte en surface les empreintes ( 9 ) des spires de décalage des couches; ces empreintes ( 9 ) permettent de maintenir la régularité géométrique du bobinage. Le support ( 7 ) comporte également l'empreinte ( 10 ) permettant d'assurer la liaison entre la fin d'une couche et le début de la couche suivante. Sur cette même figure on se rend compte que, lors du dévidage, la dernière spire (11) d'une couche et la première spire ( 12 ) de la couche suivante sont en butée sur le support ( 7 ) évitant ainsi tout risque d'entraînement de spires.

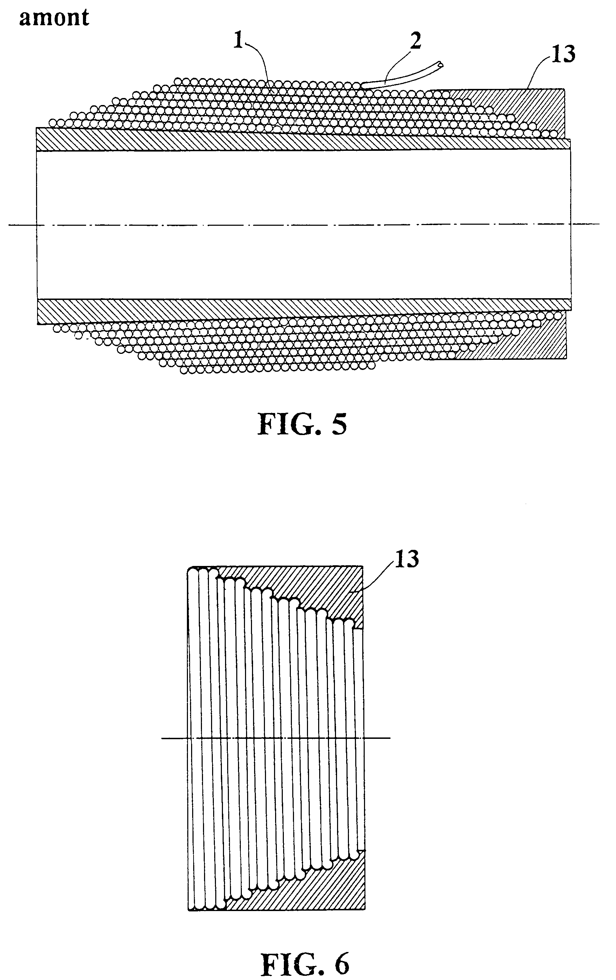

Les figures 5, 6 et 7, concernent la confection du support approprié ( 7 ) destiné à recevoir les spires des décalages aux changements de couches.

Se référant à la figure 5, dans un premier temps, un moulage ( 13 ) des décalages aval d'un bobinage ( 1 ) réalisé suivant la technique antérieure ( figure 2 ), est effectué en un matériau souple et élastique; ce matériau sera choisi en fonction, en particulier, de ses propriétés de non-adhésion vis à vis de l'élément ( 2 ) du bobinage. Le bobinage servant à la confection du moulage ( 13 ) peut être réalisé en un élément ( 2 ) autre que de la fibre optique, par exemple en fil de cuivre revêtu spécialement.

La figure 6 représente, en coupe, le support ( 13 ) après démoulage.

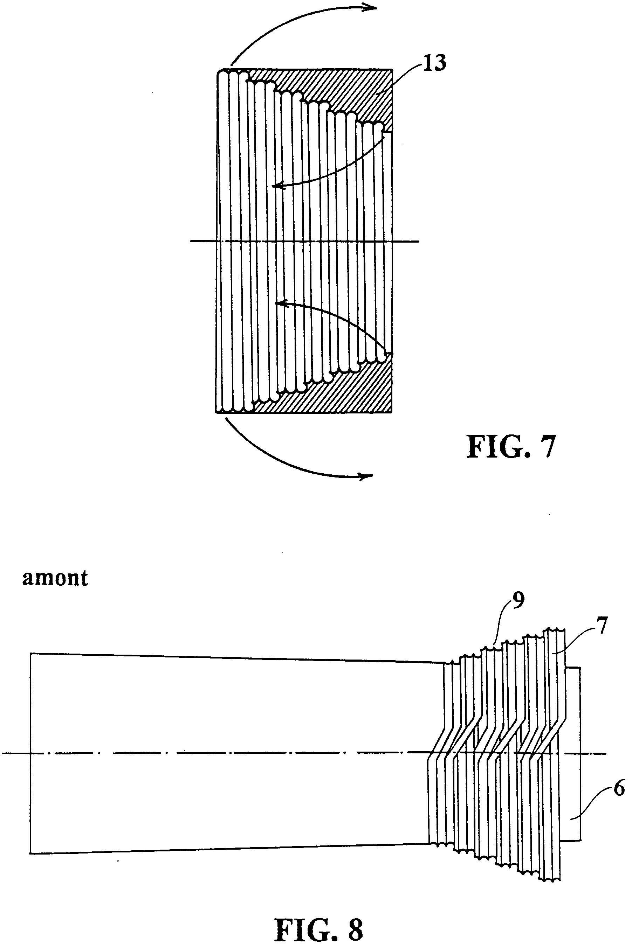

La figure 7 simule l'opération de retournement du support ( 13 ); cette opération a pour objet de disposer les empreintes des spires de décalage des couches à l'extérieur du support.

Après retournement du moulage ( 13 ), la pièce ( 7 ) ainsi obtenue est positionnée à l'extrémité aval du noyau de bobinage ( 6 ) conformément à la figure 8, c'est-à-dire, grand diamètre du support ( 7 ) côté aval.

Les empreintes ( 9 ) du support ( 7 ) doivent correspondre au diamètre de la fibre optique à bobiner, en conséquence, le diamètre du fil ( 2 ) du bobinage ( 1 ) de la figure 5, servant de modèle pour le moulage du support ( 13 ), pourra être légèrement différent de celui de la fibre optique du bobinage à fabriquer; cette mise au point est du domaine de l'homme de métier.

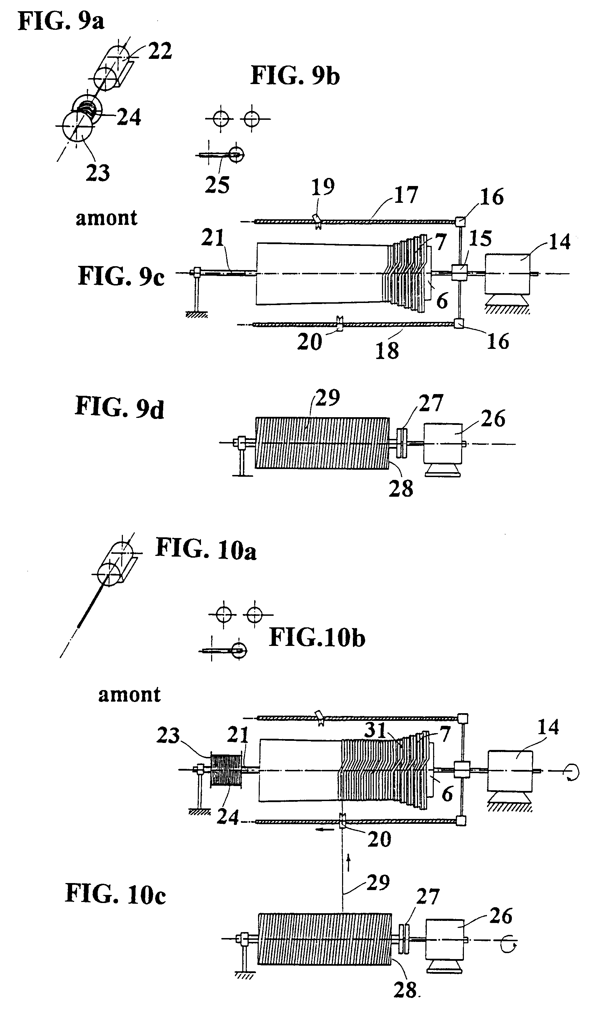

Un exemple d'équipement permettant la réalisation des décalages de couches suivant la présente invention est illustré schématiquement à la figure 9.

L'équipement comprend deux sous-ensembles:
- un premier sous-ensemble de bobinage classique composé:
- d'un moteur à courant continu ( 14 ) à vitesse variable et à deux sens de rotation, entraînant, par l'intermédiaire d'une chaîne cinématique ( boite de vitesse ( 15 ) et renvois d'angle ( 16 )), d'une part, le noyau de bobinage ( 6 ) muni, côté aval du support de décalage des couches ( 7 ), et d'autre part, deux vis ( 17 ) et ( 18 ) assurant le déplacement de deux guide fil ( 19 ) et ( 20 ). La vitesse de rotation des vis ( 17 ) et ( 18 ) est telle qu'à chaque tour de rotation du noyau ( 6 ), le déplacement des guide-fil ( 19 ) et ( 20 ) est égal au diamètre de la fibre optique à bobiner.

Un système d'inversion du sens de rotation des vis ( 17 ) et ( 18 ) permet d'inverser le sens de déplacement des guide-fil ( 19 ) et ( 20 ).L'axe d'entraînement du noyau ( 6 ) comporte une partie amovible ( 21 ) permettant le montage sur cet axe, d'une bobine de fibre optique entraînée en rotation en même temps que le noyau ( 6 ).
- d'un dévidoir comprenant, un moteur à courant continu ( 22 ), entraînant une bobine ( 23 ) de fibre optique ( 24 ). La régulation de la vitesse de rotation du moteur ( 22 ) est assurée par le pantin de régulation ( 25 ).
- un deuxième sous-ensemble ou équipement complémentaire comprenant, un moteur d'entraînement ( 26 ) à vitesse variable entraînant un coupleur magnétique ( 27 ), assurant la rotation du noyau ( 28 ), sur lequel est stockée une fibre optique ( 29 ). Le couple de rotation, moteur ou de freinage, sur le noyau ( 28 ) peut être ajusté au moyen du moteur ( 26 ) à vitesse variable, et du coupleur ( 27 ).

La réalisation des couches du bobinage, dans le sens amont vers aval, nécessite une préparation que nous allons expliquer ci-après.

Nous avons précisé précédemment, que la régularité géométrique du bobinage devait être conservée sur la totalité de la bobine, il est donc impératif, pour toute couche commencée à l'extrémité amont de la bobine, que la forme des spires corresponde exactement aux empreintes du support ( 7 ) relatives à la dite couche, de telle façon que la liaison entre la fin de la couche et le support ( 7 ) se fasse sans jeu ni chevauchement de spires. Un moyen pour atteindre ce but est de confectionner une couche provisoire à spires jointive à partir des empreintes du support ( 7 ) qui correspondent à la couche à réaliser. Cette couche provisoire sera réalisée dans le sens inverse, c'est-à-dire aval vers amont, avec un fil de même diamètre que la fibre optique ( 24 ) du bobinage.

La confection de cette couche provisoire est illustrée par la figure 10; le processus est le suivant :
- la fibre ( 29 ) du noyau ( 28 ), laquelle sera avantageusement identique à la fibre ( 24 ) du bobinage, est accrochée après passage sur le guide-fil ( 20 ), dans la première empreinte du support ( 7 ); cet accrochage est matérialisé sur la figure 10 par le point noir ( 31 ). La tension de la fibre ( 29 ) est obtenue par le coupleur ( 27 ), dont le sens de rotation, inverse, provoque le freinage du noyau ( 28 ); cette tension sera typiquement la même que celle appliquée lors du bobinage de la fibre ( 24 ).
- la bobine ( 23 ) contenant la fibre ( 24 ) du bobinage est installée provisoirement sur l'axe ( 21 ), elle est solidaire en rotation du noyau ( 6 ); la longueur de fibre entre la bobine ( 23 ) et le noyau ( 6 ) est bloquée pour éviter tout déroulement intempestif pendant la réalisation de la couche provisoire. L 'installation de la bobine ( 23 ) sur l'axe ( 21 ) n'est pas nécessaire lors de la réalisation de la première couche provisoire.

La figure 10 représente la couche provisoire en cours de réalisation, elle est poursuivie jusqu'à l'extrémité amont du noyau ( 6 ).

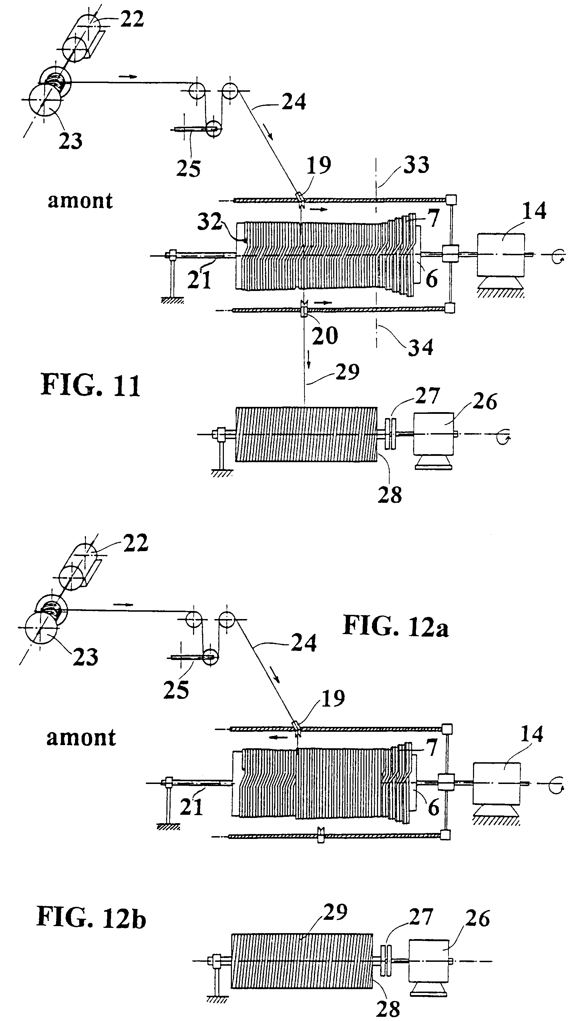

A la fin de la couche provisoire, se référant à la figure 11 :
- la bobine ( 23 ) est enlevée de l'axe ( 21 ) pour être placée sur l'axe du moteur ( 22 ).
- la fibre optique ( 24 ) de la bobine ( 23 ) est alors préparée pour l'opération de bobinage, c'est-à-dire, prend le circuit, pantin de régulation ( 25 ), guide-fil ( 19 ) et puis est fixée sur l'extrémité amont du noyau ( 6 ), à côté de la dernière spire de la couche provisoire. Le point de départ de la première couche du bobinage est matérialisé sur le noyau ( 6 ) par le point noir ( 32 ). Le guide-fil ( 19 ) est positionné en face du point de départ ( 32 ) de la couche.

L'opération de bobinage de la première couche peut alors commencer.

Le sens de rotation du moteur ( 14 ) est tel que la fibre ( 24 ) s'enroule sur le noyau ( 6 ), tandis que la fibre ( 29 ) de la couche provisoire s'enroule sur le noyau ( 28 ) au fur et à mesure de la rotation du noyau de bobinage ( 6 ). La fibre ( 24 ) prend ainsi la place de la fibre ( 29 ) jusqu'à la fin de la couche provisoire, c'est-à-dire, jusqu'à l'empreinte du support ( 7 ) correspondant à la première couche du bobinage. La fibre ( 24 ) se positionne donc exactement dans les empreintes qui lui sont destinées. La figure 11 illustre cette opération.

A la fin de la réalisation de cette première couche, les deux guide-fil étant en positions ( 33 ) et ( 34 ), sensiblement identiques, la fibre ( 29 ) est enlevée de son guide-fil ( 20 ) et fixée sur son noyau ( 28 ) qui est alors mis à l'arrêt pour l'opération suivante.

La réalisation de la deuxième couche du bobinage, dans le sens aval vers amont, se poursuit d'abord pendant quelques spires en suivant les empreintes du support ( 7 ), et ensuite en s'appuyant sur les spires de la première couche, comme dans la confection d'un bobinage classique à spires jointive. La figure 12 illustre cette opération qui sera arrêtée quelques spires avant la fin de la première couche car, côté amont, les décalages sont effectués en retrait.

Avant la réalisation de la troisième couche du bobinage, il est nécessaire de confectionner, de nouveau, une couche provisoire conformément au montage de la figure 10.

Pour ce faire, se référant à la figure 12 :
- la fibre ( 24 ) est enlevée du pantin de régulation ( 25 ) et du guide-fil ( 19 ); l'excès de longueur de fibre est enroulée sur la bobine ( 23 ) qui est démontée de l'axe du moteur ( 22 ), pour être fixée solidairement sur l'axe ( 21 ). La fibre optique ( 24 ) est immobilisée sur le noyau ( 6 ) et sur la bobine ( 23 ) afin d'éviter tout déroulement ou accrochage intempestif.

Ensuite, se référant à la figure 10, le processus de confection de cette deuxième couche provisoire est identique à celui utilisé pour la première, c'est-à-dire :
- la fibre ( 29 ) du noyau ( 28 ) est accrochée, après passage sur le guide-fil ( 20 ), dans l'empreinte du support ( 7 ) correspondant à la couche à réaliser, et l'opération de bobinage se poursuit comme indiqué précédemment.

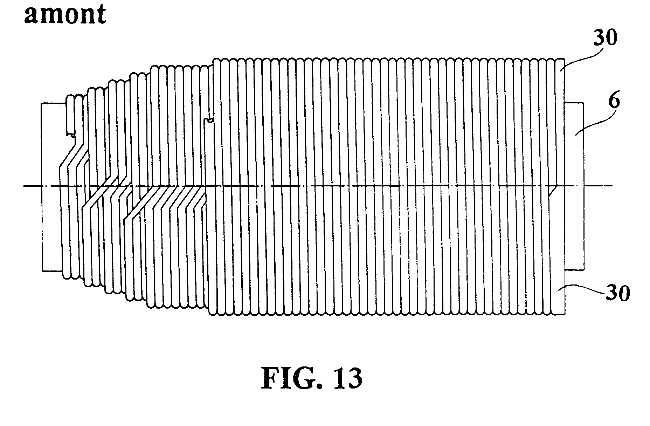

La figure 13 représente un bobinage réalisé suivant la technique de l'invention :
- les décalages côté amont ont été réalisés en retrait suivant la méthode classique de bobinage.
- les décalages côté aval ont été réalisés suivant la technique de l'invention.
- la dernière couche du bobinage est incomplète.

L'extrémité arrière ( côté aval ) du support des décalages ( 7 ), peut se prolonger par une partie cylindrique ou par une couronne ( 30 ), de diamètre égal ou supérieur à la dernière couche du bobinage.

Les empreintes du support des décalages ( 7 ), ainsi que la partie cylindrique ( 30 ), peuvent être revêtues d'une mince pellicule, métallique ou plastique, non-adhésive à bas coefficient de frottement, afin de faciliter le déroulement de la fibre optique.

Le procédé selon l'invention est particulièrement destiné à la confection de bobines, à base de fibre optique ou de fils métalliques destinées au filoguidage de missiles, de torpilles ou d'engins terrestres.

## Revendications

1. Procédé de décalage des couches d'un bobinage d'un élément filiforme ( 2 ), sur un noyau ( 6 ) et conditionné à spires jointives ou très proches les unes des autres, consistant à réaliser chaque couche du bobinage plus longue que la précédente, les spires situées au-delà de la couche sous-jacente prenant appui sur un support ( 7 ) de forme appropriée, caractérisé en ce que ledit support ( 7 ) est muni d'empreintes ( 9 ) assurant le guidage des spires et maintenant la régularité géométrique du bobinage, ledit support ( 7 ) étant constitué par un moulage ( 13 ) retourné, positionné sur le noyau de bobinage ( 6 ).

2. Procédé selon la revendication 1 caractérisé en ce que le support ( 7 ) des décalages de forme appropriée est obtenu à partir du moulage d'un matériau souple et élastique non adhésif ( 13 ), effectué sur un bobinage classique ( 1 ) comportant des décalages en retrait ( 4 ).

3. Procédé conforme aux revendications 1 et 2 caractérisé en ce qu'il n'est appliqué qu'aux décalages aval de la bobine.

4. Procédé selon les revendications 1 à 3 caractérisé en ce que les couches du bobinage de sens amont vers aval sont réalisées en prenant la place spire à spire d'une couche provisoire réalisée dans le sens aval vers amont avec une fibre identique à celle du bobinage; les premières spires de la couche provisoire étant positionnées dans les empreintes de décalage du support ( 7 ) de la couche en question.

5. Procédé selon les revendications 1 à 3 caractérisé en ce que l'extrémité arrière du support ( 7 ) des décalages est munie d'une partie cylindrique ou couronne ( 30 ) de diamètre égal ou supérieur à la couche externe du bobinage.

6. Procédé selon les revendications 1 à 4 caractérisé en ce que la fibre optique ( 24 ) de la bobine ( 23 ), en attente de bobinage, est stockée sur l'axe d'entraînement ( 21 ) et solidairement de celui-ci pendant la réalisation de la couche provisoire.

7. Procédé selon l'une quelconque des revendications précédentes caractérisé en ce que le support ( 7 ) des décalages ainsi que la partie cylindrique ou couronne ( 30 ) sont revêtues d'une pellicule métallique ou plastique à faible coefficient de frottement.

8. Procédé selon l'une quelconque des revendications précédentes caractérisé en ce que le bobinage ( 1 ), servant à la confection du moulage ( 13 ), peut être réalisé en un élément autre que de la fibre optique, par exemple en fil de cuivre revêtu d'une gaine non adhésive.

9. Procédé selon l'une quelconque des revendications précédentes caractérisé en ce que l'élément filiforme du bobinage à réaliser peut être constitué de plusieurs brins unitaires assemblés.

10. Procédé selon l'une quelconque des revendications précédentes caractérisé en ce que le support (7) des décalages peut être utilisé comme modèle dans le cas d'une fabrication de série.

11. Procédé selon l'une quelconque des revendications précédentes caractérisé en ce que l'élément filiforme du bobinage à réaliser peut avoir une forme cylindrique ou méplate.

## Claims

1. Method of offsetting the layers of a winding of a wire-like element (2), on a core (6), and packaged so that it has turns which are contiguous or very close together, the method consisting in making each layer of the winding longer than the previous layer, the turns lying beyond the underlying layer resting on a support (7) of appropriate shape, characterized in that the said support (7) has indentations (9) which guide the turns and keep the winding geometrically even, the said support (7) consisting of a moulding (13) turned inside-out and positioned on the winding core (6).

2. Method according to Claim 1, characterized in that the appropriately-shaped support (7) for the offsets is obtained from moulding a flexible and elastic non-stick material (13), this moulding being carried out on a conventional winding (1) with set-back offsets (4).

3. Method in accordance with Claims 1 and 2, characterized in that it is applied only to the downstream offsets of the reel.

4. Method according to Claims 1 to 3, characterized in that the layers of the winding from the upstream towards the downstream direction are made by taking up the space between turns with a temporary layer made in the downstream to upstream direction using a fibre identical to the one being wound; the first turns of the temporary layer being positioned in the offsetting indentations of the support (7) for the layer in question.

5. Method according to Claims 1 to 3, characterized in that the rear end of the offset support (7) has a cylindrical or ring-shaped part (30) of a diameter that is equal to or greater than the outer layer of the winding.

6. Method according to Claims 1 to 4, characterized in that the optical fibre (24) of the reel (23), while waiting to be wound, is stored on the driving spindle (21) and held fast thereon while the temporary layer is being made.

7. Method according to any one of the preceding claims, characterized in that the offset support (7) and the cylindrical or ring-shaped part (30) are coated with a metal or plastic film that has a low coefficient of friction.

8. Method according to any one of the preceding claims, characterized in that the winding (1) used to make the moulding (13) may be made of an element other than optical fibre, for example of copper wire coated with a non-stick jacket.

9. Method according to any one of the preceding claims, characterized in that the wire-like element of the winding to be made may consist of a number of unit strands held together.

10. Method according to any one of the preceding claims, characterized in that the offset support (7) can be used as a pattern for mass-production.

11. Method according to any one of the preceding claims, characterized in that the wire-like element of the winding to be made may have a cylindrical or flatted shape.

## Patentansprüche

1. Verfahren zur versetzten Anordnung der Lagen einer Wicklung eines fadenförmigen Elements (2) auf einem Kern (6) mit Windungen, die aneinander anliegen oder sehr nahe nebeneinanderliegen, darin bestehend, jede Wicklungsschicht länger als die vorhergehende auszuführen, wobei die über die darunterliegende Wicklungsschicht hinaus befindlichen Windungen auf einem entsprechend geformten Träger (7) aufliegen,
**dadurch gekennzeichnet,**
daß der genannte Träger (7) mit Vertiefungen (9) versehen ist, die die Führung der Windungen gewährleisten und die geometrische Gleich- bzw. Regelmäßigkeit der Wicklung aufrechterhalten, wobei der genannte Träger (7) durch einen Abguß (13) gebildet wird, angebracht auf dem Wicklungskern (6).

2. Verfahren nach Anspruch 1, dadurch gekennzeichnet, daß der entsprechend geformte Versetzungsträger (7) hergestellt wird als Abguß aus einem nachgiebigen und elastischen, nichthaftenden Material (13), durchgeführt an einer klassischen Wicklung (1), die Rücksprung-Versetzungen (4) aufweist.

3. Verfahren nach einem der Ansprüche 1 und 2, dadurch gekennzeichnet, daß es nur für die hinteren Versetzungen der Spule angewandt wird.

4. Verfahren nach einem der Ansprüche 1 bis 3, dadurch gekennzeichnet, daß die Wicklungsschichten der Richtung von vorn nach hinten hergestellt werden, indem sie Windung für Windung mit einer der Wicklung entsprechenden Faser den Platz einer provisorischen, in der Richtung von hinten nach vorn ausgeführten Schicht einnehmen, wobei die ersten Windungen der provisorischen Schicht in den Versetzungsvertiefungen des Trägers (7) der betreffenden Schicht angebracht werden.

5. Verfahren nach einem der Ansprüche 1 bis 3, dadurch gekennzeichnet, daß das hintere Ende des Versetzungsträgers (7) mit einem zylindrischen oder ringförmigen Teil (30) gleichen oder größeren Durchmessers als die Außenschicht der Wicklung versehen ist.

6. Verfahren nach einem der Ansprüche 1 bis 4, dadurch gekennzeichnet, daß die optische Faser (24) der Spule (23) in Erwartung des Wickelns auf der Antriebsachse (21) gespeichert wird und während der Herstellung der provisorischen Schicht mit dieser verbunden ist.

7. Verfahren nach einem der vorangehenden Ansprüche, dadurch gekennzeichnet, daß der Versetzungsträger (7) sowie der zylindrische oder ringförmige Teil (30) mit einer Metall- oder Kunststoffhaut mit niedrigem Reibungskoeffizienten überzogen sind.

8. Verfahren nach einem der vorangehenden Ansprüche, dadurch gekennzeichnet, daß die Wicklung (1), die der Herstellung des Abgusses (13) dient, mit einem anderen Element als der optischen Faser ausgeführt werden kann, z.B. einem mit einer nichthaftenden Hülle überzogenen Kupferdraht.

9. Verfahren nach einem der vorangehenden Ansprüche, dadurch gekennzeichnet, daß das fadenförmige Element der herzustellenden Wicklung durch mehrere filierte bzw. verbundene Einzelstränge gebildet werden kann.

10. Verfahren nach einem der vorangehenden Ansprüche, dadurch gekennzeichnet, daß der Versetzungsträger (7) im Falle einer Serienfertigung als Modell benutzt werden kann.

11. Verfahren nach einem der vorangehenden Ansprüche, dadurch gekennzeichnet, daß das fadenförmige Element der herzustellenden Wicklung eine zylindrische oder abgeflachte bzw. halbflache Form haben kann.
